**Europäisches Patentamt**

**European Patent Office**

**Office européen des brevets**

(19)

(11) Veröffentlichungsnummer: **0 281 893 B1**

# EUROPÄISCHE PATENTSCHRIFT

(12)

(45) Veröffentlichungstag der Patentschrift:
**03.04.91 Patentblatt 91/14**

(51) Int. Cl.⁵ : **B32B 27/08**, B65D 65/40

(21) Anmeldenummer: **88103029.0**

(22) Anmeldetag: **01.03.88**

(54) Verbundfolie zur Herstellung von quaderförmigen evakuierten Packungen.

(30) Priorität: **10.03.87 DE 8703556 U**
**10.03.87 DE 8707377 U**

(43) Veröffentlichungstag der Anmeldung:
**14.09.88 Patentblatt 88/37**

(45) Bekanntmachung des Hinweises auf die
Patenterteilung:
**03.04.91 Patentblatt 91/14**

(84) Benannte Vertragsstaaten:
**AT BE CH DE FR GB IT LI NL SE**

(56) Entgegenhaltungen:
**EP-A- 0 079 215**

(56) Entgegenhaltungen:
**EP-A- 0 096 581**
**EP-A- 0 196 798**
**WO-A-87/00795**
**US-A- 3 949 114**

(73) Patentinhaber: **HOECHST
AKTIENGESELLSCHAFT
Postfach 80 03 20
W-6230 Frankfurt am Main 80 (DE)**

(72) Erfinder: **Kastell, Werner
Jahnstrasse 1
W-6209 Hohenstein-Breithardt (DE)**
Erfinder: **Schad, Alfred
Hauberisserstrasse 21
W-6200 Wiesbaden (DE)**

## Beschreibung

Die vorliegende Erfindung beschreibt eine Verbundfolie zur Herstellung von evakuierten Schlauchbeutelpackungen aus thermoplastischen Kunststoffen mit einer besonders geringen Sauerstoffdurchlässigkeit sowie eine aus dieser Verbundfolie hergestellte Schlauchbeutelpackung.

Beutelpackungen mit einer möglichst niedrigen Sauerstoffdurchlässigkeit werden insbesondere benötigt zum Verpacken von empfindlichen, gegen Aromaverlust anfälligen und bei Sauerstoffaufnahme verderblichen Lebensmitteln, insbesondere für gemahlenen Kaffee. Um für diesen speziellen Einsatzzweck das Verpackungsgut auch über längere Zeitspannen in wirklich einwandfreiem Zustand zu bewahren, werden als Verpackungsmaterial meist Verbunde umfassend Aluminiumfolien eingesetzt. Diese Verbundfolien werden hergestellt unter Verwendung von biaxial gestreckter Polyethylenterephthalatfolie bzw. Polyamidfolie als Trägerfolie. Diese Aluminiumverbundfolien haben jedoch den Nachteil, daß sie teuer und nur durch technisch aufwendige Verfahren herstellbar sind.

Durch die Weiterentwicklung neuer Techniken konnten in der Folgezeit Folien aus Kunststoff zum Einsatz gebracht werden, die durch Vakuumaufdampfung entstandene Aluminiumschichten trugen und damit preiswert und einfach herstellbar waren. Die metallisierten Verbundfolien selbst wiesen zwar akzeptable Sauerstoffsperreigenschaften auf, jedoch stellte sich nachteiligerweise heraus, daß bei der Verarbeitung der mit den hauchdünnen Schichten aus Metall überzogenen Folien zu Verpackungseinheiten und beim anschließenden Evakuieren derselben, insbesondere im Bereich der Kanten und Ecken der Packung, Verdehnungen in einem solchen Ausmaß auftraten, daß die Sauerstoffdurchlässigkeit bedingt durch Beschädigungen der Metallisierung in der Größenordnung einer Zehnerpotenz anstieg und daß daher diese Packungen für den bestimmungsgemäßen Einsatzzweck nicht mehr als geeignet anzusehen sind.

Es stellte sich somit die Aufgabe, eine Folie zu schaffen, die geeignet ist, zu quaderförmigen evakuierten Schlauchbeutelpackungen verarbeitet zu werden, die die Vorteile der, verglichen mit Aluminiumfolien, technisch unkomplizierten und damit preisgünstigeren Herstellbarkeit besitzt und die gleichzeitig aber bei der Verarbeitung und dem Verpackungsvorgang ihre hervorragenden Sauerstoffsperreigenschaften beibehält.

Gelöst wird diese Aufgabe überraschenderweise durch eine Folie der eingangs genannten Gattung, deren Kennzeichenmerkmale darin zu sehen sind, daß sie wenigstens eine biaxial streckorientierte Schicht aus einem Polymeren enthaltend Vinylalkoholeinheiten und wenigstens eine Schicht aus Polyolefin enthält.

Unter einem Polymeren enthaltend Vinylalkoholeinheiten soll im wesentlichen Polyvinylalkohol oder ein Copolymerisat aus Vinylalkohol und Alfa-Olefineinheiten mit 2 bis 5 C-Atomen, insbesondere aus Ethyleneinheiten, zu verstehen sein. Insbesondere sollen die copolymerisierten Alfa-Olefineinheiten in einem mengenmäßigen Anteil von nicht mehr als 40 Mol-%, bevorzugt nicht mehr als 20 Mol-%, vorliegen, bezogen auf die Gesamtmenge an Copolymerisat.

Das Copolymerisat entsteht durch Copolymerisation von Olefineinheiten mit Vinylacetat und nachfolgender, praktisch vollständiger Verseifung des copolymerisierten Vinylacetats derart, daß wenigstens 95 Gew.-% der Acetylgruppen des Copolymerisats durch Verseifung in OH-Gruppen umgewandelt sind.

Auch der Polyvinylalkohol entsteht durch Polymerisation von Vinylacetat und nachfolgender Verseifung zu wenigstens 95%. Die Schicht aus Polyvinylalkohol oder Copolymerisat aus Vinylalkohol und Alfa-Olefin ist erfindungsgemäß biaxial streckorientiert, insbesondere biaxial streckorientiert und hitzefixiert.

Die Schicht aus Polyolefin enthält bevorzugt ein siegelbares Polyolefin, bevorzugt soll das Polyolefin heißsiegelbar sein. Geeignete Polyolefine sind z.B. Polyethylen hoher Dichte und Polyethylen niedriger Dichte, Copolymere aus Ethylen und Propylen, Terpolymere aus Ethylen, Propylen und Butylen oder Mischungen aus diesen. Dabei liegt der Ethylengehalt der Co- bzw. Terpolymeren insbesondere im Bereich von 0,1 bis 15 Gew.-%, bezogen auf das Gesamtgewicht der jeweiligen Polymeren, der Butylengehalt liegt im Bereich von 1 bis 25 Gew.-%, ebenfalls bezogen auf das Gesamtgewicht des jeweiligen Polymeren. Die siegelbare Polyolefinschicht kann zur Verbesserung der Kratzfestigkeit und der Laufsicherheit auf schnellaufenden Verpackungsmaschinen übliche Zusätze wie niedermolekulare, verträgliche Harze, Schlupf- und Gleitmittel, Antiblockmittel oder Antistatika enthalten. Andere Zusätze wie Stabilisatoren gegen thermische Alterung oder Antioxydantien können gleichfalls gegebenenfalls vorgesehen sein.

Die Polyolefinschicht liegt als unorientierte weitgehend amorphe-Schicht vor. Die Schichtdicke der Polyolefinschicht liegt im Bereich von 40 bis 100, bevorzugt von 50 bis 80 μm. Die Polyolefinschicht kann durch Schmelzextrusion auf die biaxial orientierte Folie aus Polymeren enthaltend Polyvinylalkoholeinheiten und anschließender Abkühlung aufgebracht werden, bevorzugt wird jedoch die Polyolefinschicht getrennt von der Schicht aus Polymeren enthaltend Vinylalkoholeinheiten hergestellt und anschließend erst mit Hilfe eines geeigneten Klebers zusammenkaschiert. Geeignete Klebstoffe sind z.B. lösemittelhaltige Kleber oder Zweikomponentenkleber, die üblicherweise in Mengen im bereich von 0,5 bis 3.0 g/m² angewandt werden. Die Schichtdicke der Schicht aus Polymeren enthaltend Einheiten von Vinylalkohol liegt zwischen 8 und 25 µm, bevorzugt zwischen 12 und 15 µm.

In einer weiteren Ausführungsform der Erfindung kann die Verbundkombination auch noch zusätzliche weitere Schichten aus Polyvinylidenchlorid enthalten. Bevorzugt ist die Schicht aus Polymeren enthaltend Einheiten aus Vinylalkohol beidseitig mit Schichten aus Polyvinylidenchlorid überzogen. Diese zusätzlichen Schichten verleihen der erfindungsgemäßen Verbundkombination eine verbesserte Beständigkeit gegen den Einfluß von Feuchtigkeit. Das Aufbringen der Polyvinylidenchloridüberzüge ist im Stand der Technik bekannt und wird üblicherweise durch Auftrag einer Dispersion des Polymeren in einem geeigneten Dispersionsmedium vorgenommen, insbesondere in wäßrigem Medium oder in einer Mischung von Wasser mit wassermischbaren organischen Lösemitteln.

In einer weiteren erfindungsgemäß vorgesehenen Ausführungsform kann die Schicht aus Polymeren enthaltend Vinylalkoholeinheiten mit einer Metallisierung versehen sein. Als Metallisierung kommen vor allem durch Vakuumbedampfung aufgebrachte dünne Schichten aus Aluminium in Frage, die der Folie ein hochglänzendes Aussehen verleihen. Durch die Metallisierung wird das optische Erscheinungsbild der Folie verbessert, und die aus der Folie hergestellte Verpackung erhält ein das menschliche Geschmacksempfinden angenehm ansprechendes attraktives Aussehen. Darüber hinaus wird durch die Metallisierung die Lichtdurchlässigkeit der Folie herabgesetzt, was für manche Anwendungszwecke wünschenswert sein kann, und es wird auch die Wasserdampfdurchlässigkeit reduziert.

In einer weiteren ganz bevorzugten Ausführungsform ist die erfindungsgemäße Verbundkombination mit einer Kombination aus Metallisierung und Beschichtung aus Polyvinylidenchlorid versehen. Dabei kann zunächst die Schicht aus Polymeren enthaltend Vinylalkoholeinheiten ein- oder beidseitig mit Schichten aus Polyvinylidenchlorid überzogen und dann metallisiert werden. Die metallisierte Folie wird danach auf der metallisierten Seite mit der Polyolefinschicht zusammenkaschiert. In einer besonders bevorzugten Ausführungsform der Erfindung ist die Verbundfolie zusätzlich mit einer Bedruckung versehen, die außen auf dem Überzug aus Polyvinylidenchlorid leicht aufgebracht werden kann.

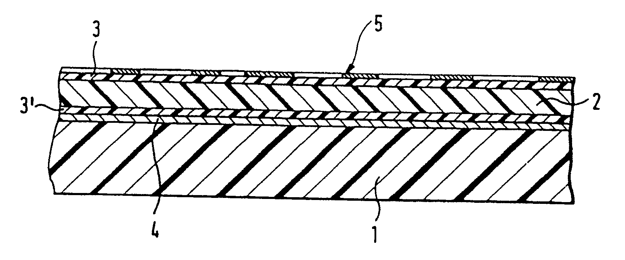

Die Erfindung wird anhand der beigefügten Abbildung beispielhaft noch näher erläutert. Die Abbildung zeigt einen senkrechten Schnitt durch eine erfindungsgemäße Verbundkombination in seitlicher Ansicht. Im einzelnen sind durch Bezugsziffern hervorgehoben die Polyolefinschicht 1, die Schicht enthaltend Einheiten aus Polyvinylalkohol 2, die auf ihrer Oberfläche beidseitig mit Überzügen aus Polyvinylidenchlorid 3/3' versehen ist, sowie eine Metallisierung 4, die zwischen der Polyolefinschicht 1 und der inneren Schicht aus Polyvinylidenchlorid 3' angeordnet ist. Auf der freien Oberfläche der äußeren Schicht aus Polyvinylidenchlorid 3 ist die Bedruckung 5 erkennbar.

Aus der erfindungsgemäßen Verbundkombination lassen sich nach den üblichen Techniken Schlauchbeutelpackungen fertigen, die im wesentlichen quaderförmige Gestalt besitzen und in die das Packgut eingefüllt wird. Hierzu wird zunächst aus einer Flachfolie durch Bildung einer Naht und Verschweißung derselben ein Folienschlauch hergestellt, der dann in geeignete Stücke geschnitten, gefalzt, befüllt, evakuiert und durch Heißversiegelung verschlossen wird. Geeignete Maschinen zur Durchführung dieses Verfahrens zur Herstellung der befüllten Beutel sind dem Fachmann bekannt.

Überraschenderweise hat sich gezeigt, daß die Sauerstoffdurchlässigkeit der Schlauchbeutelpackungen für gemahlenen Kaffee durch den Einsatz der erfindungsgemäßen Folie signifikant herabgesetzt werden konnte, verglichen mit Packungen aus metallisierter Folie aus anderen Polymeren. An einer metallisierten Polyesterfolie (Polyethylenterephthalat einer Dicke von 12 µm), die mit einer Polyethylenschicht von 75 µm überzogen war, wurde die Sauerstoffdurchlässigkeit in der Einheit (cm³/m² · d · bar) gemessen.

Für die flachliegende Folie ergab die Messung 0,5 bis 0,8, während an der fertig hergestellten Verpackung Werte von 2 bis 6 gemessen wurden.

Demgegenüber wurden an einer erfindungsgemäßen Verbundkombination aus Polyethylen und reinem Polyvinylalkohol mit einem Verseifungsgrad von 99,9% die Sauerstoffdurchlässigkeit an der flachliegenden Folie als < 0,01 gemessen, und an einer aus der genannten erfindungsgemäßen Verbundkombination hergestellten evakuierten Schlauchpackung für gemahlenen Kaffee wurde immer noch eine Sauerstoffdurchlässigkeit von < 0,01 bestimmt. besonders überraschend ist, daß diese geringe Sauerstoffdurchlässigkeit auch bei Luftfeuchtigkeitswerten um 85% rel. Luftfeuchtigkeit aufrechterhalten wird.

Weitere Vorteile der Erfindung sind darin zu sehen, daß die Folie eine Wärmebeständigkeit nach ASTM D 1637 bis 220° aufweist und somit als Verbundfolie auf allen üblichen Abpackmaschinen problemlos verarbeitbar ist. Die Folie besitzt eine hervorragende Steifigkeit (E-Modul) und eine sehr hohe Durchstoßfestigkeit, die bei gemahlenem kaffee besonders wichtig ist. Die erfindungsgemäße Folie weist eine Dichte von 1,32 g/cm³ auf und ist damit im Vergleich zu Polyesterfolie enthaltenden Verpackungsmaterialien (Dichte : 1,40 g/cm³) leichter. Damit wird eine erhöhte Ergiebigkeit erreicht. Erfindungsgemäß besonders geeignet ist die Polyvinylalkoholfolie BOVLON(R) der Firma Nippon Gohsei.

## Ansprüche

1. Verbundfolie zur Herstellung von evakuierten Schlauchbeutelpackungen aus thermoplastischen Kunststoffen mit einer besonders niedrigen Sauerstoffdurchlässigkeit, dadurch gekennzeichnet, daß sie wenigstens eine biaxial streckorientierte Schicht aus einem Polymeren enthaltend Vinylalkoholeinheiten und eine Schicht aus einem Polyolefin enthält.

2. Verbundfolie nach Anspruch 1, dadurch gekennzeichnet, daß die Schicht aus Polymeren enthaltend Vinylalkoholeinheiten Polyvinylalkohol oder ein Copolymerisat aus Vinylalkohol und Alfa-Olefinen mit 2 bis 5 C-Atomen enthält.

3. Verbundfolie nach Anspruch 2, dadurch gekennzeichnet, daß als Alfa-Olefin Ethylen eingesetzt wird in einem mengenmäßigen Anteil von höchstens 40 Mol-%, bevorzugt höchstens 20 Mol-%, bezogen auf die Gesamtmenge an Copolymerisat.

4. Verbundfolie nach einem der Ansprüche 1 bis 3, dadurch gekennzeichnet, daß die Schicht aus Polyolefin heißsiegelbar ist.

5. Verbundfolie nach einem der Ansprüche 1 bis 4, dadurch gekennzeichnet, daß die Schicht aus Polyolefin Ethylen, Copolymere aus Ethylen und Propylen, Terpolymere aus Ethylen, Propylen und Butylen oder Mischungen von diesen enthält.

6. Verbundfolie nach einem der Ansprüche 1 bis 5, dadurch gekennzeichnet, daß der Verbund durch Kleberkaschierung hergestellt ist.

7. Verbundfolie nach einem der Ansprüche 1 bis 6, dadurch gekennzeichnet, daß die Schichtdicke der Schicht aus Polyolefin im Bereich zwischen 40 und 100 µm liegt, bevorzugt zwischen 50 und 80 µm.

8. Verbundfolie nach einem der Ansprüche 1 bis 7, dadurch gekennzeichnet, daß die Schichtdicke der Schicht aus Polymeren enthaltend Vinylalkoholeinheiten im Bereich von 8 bis 25 µm liegt, bevorzugt zwischen 12 und 15 µm.

9. Verbundfolie nach einem der Ansprüche 1 bis 8, dadurch gekennzeichnet, daß sie wenigstens eine zusätzliche Schicht aus Polyvinylidenchlorid enthält.

10. Verbundfolie nach Anspruch 9, dadurch gekennzeichnet, daß die Schicht aus Polyvinylidenchlorid unmittelbar mit der Schicht aus Polymeren enthaltend Vinylalkoholeinheiten verbunden ist.

11. Verbundfolie nach Anspruch 9, dadurch gekennzeichnet, daß die Schicht aus Polymeren enthaltend Vinylalkoholeinheiten beidseitig mit Schichten aus Polyvinylidenchlorid überzogen ist.

12. Verbundfolie nach einem der Ansprüche 1 bis 8, dadurch gekennzeichnet, daß sie eine Metallisierung trägt.

13. Verbundfolie nach Anspruch 12, dadurch gekennzeichnet, daß die Metallisierung durch Vakuumaufdampfung aufgebrachtes Aluminium ist.

14. Verbundfolie nach einem der Ansprüche 1 bis 8, dadurch gekennzeichnet, daß sie mit einer Kombination aus Metallisierung und einer Schicht aus Polyvinylidenchlorid versehen ist.

15. Verbundfolie nach Anspruch 14, dadurch gekennzeichnet, daß die Metallisierung in direktem Kontakt zu der Schicht aus Polyolefin steht.

16. Verbundfolie nach Anspruch 14 oder 15, dadurch gekennzeichnet, daß die äubere Schicht aus Polyvinylidenchlorid mit einer Bedruckung versehen ist.

17. Verbundfolie nach einem der Ansprüche 1 bis 16, dadurch gekennzeichnet, daß sie eine Sauerstoffdurchlässigkeit von weniger als 0,01 cm³/m² · d · bar aufweist.

18. Im wesentlichen quaderförmige, evakuierte Schlauchbeutelpackung, insbesondere für gemahlenen Kaffee, mit einem Inhalt an Füllgut im Bereich von 0,1 bis 1,0 kg, hergestellt aus einer Verbundfolie gemäß einem der Ansprüche 1 bis 17.

## Claims

1. Composite film for use in the production of vacuum packages in the form of tubular bags of thermoplastics having a particularly low permeability to oxygen, wherein the composite film comprises at least one biaxially stretch-oriented layer formed of a polymer containing vinyl alcohol units and a layer formed of a polyolefin.

2. The composite film as claimed in claim 1, wherein the layer formed of a polymer containing vinyl alcohol units contains polyvinyl alcohol or a copolymer of vinyl alcohol and α-olefins having 2 to 5 carbon atoms.

3. The composite film as claimed in claim 2, wherein the α-olefin used comprises ethylene in a quantitative proportion of not more than 40 mol-%, preferably not more than 20 mol-%, based on the total amount of copolymer.

4. The composite film as claimed in any of claims 1 to 3, wherein the layer formed of a polyolefin is heatsealable.

5. The composite film as claimed in any of claims 1 to 4, wherein the layer formed of a polyolefin contains ethylene, copolymers of ethylene and propylene, terpolymers of ethylene, propylene and butylene or mixtures of these.

6. The composite film as claimed in any of claims 1 to 5, wherein the composite structure has been prepared by adhesive bonding.

7. The composite film as claimed in any of claims 1 to 6, wherein the layer thickness of the layer formed of a polyolefin is in the range between 40 and 100 µm, preferably between 50 and 80 µm.

8. The composite film as claimed in any of claims 1 to 7, wherein the layer thickness of the layer formed of a polymer containing vinyl alcohol units is in the range between 8 and 25 μm, preferably between 12 and 15 μm.

9. The composite film as claimed in any of claims 1 to 8, which contains at least one additional layer formed of polyvinylidene chloride.

10. The composite film as claimed in claim 9, wherein the layer formed of polyvinylidene chloride is directly bonded to the layer formed of a polymer containing vinyl alcohol units.

11. The composite film as claimed in claim 9, wherein the layer formed of a polymer containing vinyl alcohol units is coated with layers formed of polyvinylidene chloride on either side thereof.

12. The composite film as claimed in any of claims 1 to 8, which carries a metallization.

13. The composite film as claimed in claim 12, wherein the metallization comprises aluminum applied by vacuum deposition.

14. The composite film as claimed in any of claims 1 to 8, which is provided with a combination of metallization and a layer formed of polyvinylidene chloride.

15. The composite film as claimed in claim 14, wherein the metallization is in direct contact with the layer formed of a polyolefin.

16. The composite film as claimed in claim 14 or 15, wherein the outer layer formed of polyvinylidene chloride is provided with a printing.

17. The composite film as claimed in any of claims 1 to 16, which has a permeability to oxygen of less than 0.01 cm³/m² · d · bar.

18. Essentially parallelepipedal vacuum package in the form of a tubular bag, in particular for ground coffee, having a content of packaged product in the range from 0.1 to 1.0 kg and being produced from a composite film as claimed in any of claims 1 to 17.

## Revendications

1. Feuille composite pour la fabrication d'emballages de type sachet sous vide, à base de matières synthétiques thermoplastiques ayant une perméabilité à l'oxygène particulièrement faible, caractérisée en ce qu'elle contient au moins une couche orientée biaxialement par étirage, à base d'un polymère contenant des motifs alcool vinylique, et une couche à base d'une polyoléfine.

2. Feuille composite selon la revendication 1, caractérisée en ce que la couche à base de polymère contenant des motifs alcool vinylique contient du poly(alcool vinylique) ou un copolymère d'alcool vinylique et d'alpha-oléfines ayant de 2 à 5 atomes de carbone.

3. Feuille composite selon la revendication 2, caractérisée en ce que l'on utilise, en tant qu'alpha-oléfine, de l'éthylène en une proportion d'au plus 40% en moles, de préférence d'au plus 20% en moles, par rapport à la quantité totale de copolymère.

4. Feuille composite selon l'une des revendications 1 à 3, caractérisée en ce que la couche à base de polyoléfine est soudable à chaud.

5. Feuille composite selon l'une des revendications 1 à 4, caractérisée en ce que la couche à base de polyoléfine contient de l'éthylène, des copolymères d'éthylène et de propylène, des terpolymères d'éthylène, propylène et butylène ou des mélanges de ceux-ci.

6. Feuille composite selon l'une des revendications 1 à 5, caractérisée en ce que l'assemblage est obtenu par enduction d'adhésif.

7. Feuille composite selon l'une des revendications 1 à 6, caractérisée en ce que l'épaisseur de couche de la couche à base de polyoléfine se situe dans la plage comprise entre 40 et 100 μm, de préférence entre 50 et 80 μm.

8. Feuille composite selon l'une des revendications 1 à 7, caractérisée en ce que l'épaisseur de couche de la couche à base de polymère contenant des motifs alcool vinylique se situe dans la plage allant de 8 à 25 μm, de préférence comprise entre 12 et 15 μm.

9. Feuille composite selon l'une des revendications 1 à 8, caractérisée en ce qu'elle contient au moins une couche supplémentaire à base de poly(chlorure de vinylidène).

10. Feuille composite selon la revendication 9, caractérisée en ce que la couche à base de poly(chlorure de vinylidène) est directement assemblée avec la couche à base de polymère contenant des motifs alcool vinylique.

11. Feuille composite selon la revendication 9, caractérisée en ce que la couche à base de polymère contenant des motifs alcool vinylique est revêtue des deux côtés avec des couches à base de poly(chlorure de vinylidène).

12. Feuille composite selon l'une des revendications 1 à 8, caractérisée en ce qu'elle porte une métallisation.

13. Feuille composite selon la revendication 12, caractérisée en ce que la métallisation consiste en aluminium appliqué par vaporisation sous vide.

14. Feuille composite selon l'une des revendications 1 à 8, caractérisée en ce qu'elle est munie d'une association de métallisation et d'une couche de poly(chlorure de vinylidène).

15. Feuille composite selon la revendication 14, caractérisée en ce que la métallisation est en contact direct avec la couche à base de polyoléfine.

16. Feuille composite selon la revendication 14 ou 15, caractérisée en ce que la couche externe à base de poly(chlorure de vinylidène) est munie d'une impression.

17. Feuille composite selon l'une des revendications 1 à 16, caractérisée en ce qu'elle présente une perméabilité à l'oxygène de moins de 0,01 cm³/m³ · j · bar.

18. Emballage sous vide pratiquement parallélépipédique, en particulier pour café moulu, ayant un contenu d'article emballé dans la plage de 0,1 à 1,0 kg, fabriqué à partir d'une feuille composite selon l'une des revendications 1 à 17.